# EUROPÄISCHE PATENTSCHRIFT

(11) **EP 1 146 943 B1**
(45) Veröffentlichungstag und Bekanntmachung des Hinweises auf die Patenterteilung: **17.03.2004**
(21) Anmeldenummer: 99953597.4
(22) Anmeldetag: 23.08.1999
(51) Int. Cl.: B01D 25/00, B01D 25/21

(54) **KAMMERPLATTE**
CHAMBER PLATE
PLATEAU DE CHAMBRE

(30) Priorität: 11.12.1998 DE 29822178 U
(43) Veröffentlichungstag der Anmeldung: 24.10.2001
(73) Patentinhaber: Klinkau Besitzgesellschaft mbH, 87616 Marktoberdorf-Leuterschach (DE)
(72) Erfinder: STANIK, Reimund, D-87616 Marktoberdorf-Leuterschach (DE)
(74) Vertreter: Appelt, Christian W.
(86) Internationale Anmeldenummer: PCT/DE1999/002664
(87) Internationale Veröffentlichungsnummer: WO 2000/035554

(56) Entgegenhaltungen:
- DE-A- 3 138 866

## Beschreibung

Die Erfindung betrifft eine Kammerplatte für eine Filterpresse, mit einem Zentralbereich und einem Randbereich, wobei eine Oberfläche im Zentralbereich im wesentlichen eben ausgebildet ist.

Kammerplatten dieser Art werden für Filterpressen eingesetzt, bei denen die Trennung der festen von den flüssigen Bestandteilen eines zu filtrierenden Mediums in einer Kammerfilterpresse erfolgt. Der Einsatzbereich derartiger Filterpressen reicht von Lebensmitteln bis zum Abwasser, von der Chemie bis zum Umweltschutz. Mit einer Filterpresse werden nicht nur Feststoffe und Flüssigkeiten voneinander getrennt; darüber hinaus können weitere Verfahrensschritte, wie z.B. Wasch- und Neutralisationsprozesse durchgeführt werden.

In EP-0 083 715 sind eine bekannte Kammerplatte und deren Herstellung offenbart. Die bekannte Kammerplatte weist einen Zentralbereich und einen Randbereich auf. In einem Querschnitt senkrecht zu einer Oberfläche des Zentralbereiches weist die Kammerplatte im Randbereich eine gegenüber dem Zentralbereich vergrößerte Dicke auf. Dieses ist notwendig, um bei einem Filterprozeß mittels der Kammerplatte eine Kammer auszubilden.

Den aus dem Stand der Technik bekannten Kammerplatten ist gemeinsam, daß der Querschnitt senkrecht zur Oberfläche des Zentralbereichs im Randbereich eine wesentlich größere Dicke als im Zentralbereich aufweist. Hieraus ergeben sich für die Herstellung der bekannten Kammerplatten Schwierigkeiten. Gemäß EP-0 083 715 kann vorgesehen sein, an den dicken Stellen der Kammerplatte vorgeformte Formlinge aufzulegen und diese anschließend im Randbereich aufzuschmelzen, um diese vorgeformten Formlinge an der Kammerplatte zu befestigen. In einem anderen Verfahren (vgl. DE-31 38 858) werden vorgepreßte Halbzeugplatten umgeformt, indem Material durch Temperatur und Druck von den Dünnstellen in die Dickstellen gedrückt wird.

Die DE 31 38 866 A1 offenbart ein Verfahren zur Herstellung von Fertigformlingen mit Bereichen unterschiedlichen Querschnitts, insbesondere von Kammer- und Membranfilterplatten für Fest - Flüssigtrennung und eine Kombination bekannter Herstellungsverfahren. In diesem Dokument ist ebenfalls eine Kammerplatte gezeigt, wobei diese in einem Querschnitt senkrecht zur Oberfläche des Zentralbereiches einen Randbereich aufweist, der eine wesentlich größere Dicke hat als der Querschnitt im Zentralbereich.

Es kann weiterhin vorgesehen sein, mittels Treibmitteln zu arbeiten. Hierbei wird ein vorplastifizierter Kunststoff in einer Form eingebracht. Während des Abkühlprozesses bildet sich an den Dickstellen des Querschnitts der Kammerplatte ein Schaumfeld. Die nicht vorgesehenen Hohlräume können einerseits unbeachtet bleiben, was zu einem minderwertigen Produkt führt. Andererseits können Lunker an den Dickstellen dadurch umgangen werden, daß an den Dickstellen Nachfüllmöglichkeiten so vorgesehen sind, daß während des Abkühlens vorplastifiziertes Material nachgeschoben werden kann, um den Schrumpfprozeß auszugleichen. Die beschriebenen Möglichkeiten zur Herstellung einer bekannten Kammerplatte setzen aufwendige Herstellungsverfahren voraus.

Das mit der vorliegenden Erfindung zu lösende technische Problem besteht darin, eine Kammerplatte der eingangs beschriebenen Art zu schaffen, die mit geringerem Aufwand und auf einfache Weise herstellbar ist.

Erfindungsgemäß wird dieses technische Problem durch die im Kennzeichen des Schutzanspruchs 1 genannten Merkmale gelöst.

Der wesentliche Vorteil, welcher mit der Erfindung gegenüber dem Stand der Technik erreicht ist, besteht darin, daß eine Kammerplatte mit den Merkmalen des Schutzanspruchs 1 mittels eines normalen Preßverfahrens aus Granulat oder einem vorplastifizierten Material herstellbar ist. Die bei der Herstellung der bekannten Kammerplatten auftretende Lunkerbildung ist vermieden. Hierdurch werden Aufwendungen eingespart, um die bei der Herstellung der bekannten Kammerplatten auftretende Lunkerbildung zu vermeiden. Die Herstellung der Kammerplatten wird insgesamt einfacher und weniger zeitaufwendig.

Ein weitere Vorteil besteht darin, daß keine Treibmittel oder Nachfüllstationen notwendig sind. Es kann mit der einfachen Preßtechnik oder Spritzgußtechnik gearbeitet werden.

Zweckmäßig kann vorgesehen sein, daß im Randbereich ein Dichtrand ausgebildet ist, wobei im Querschnitt der Kammerplatte eine Dicke des Dichtrandes im wesentlichen gleich der Dicke des Innenbereiches ist, wodurch die Kammerplatte im gesamten Querschnitt eine im wesentliche gleiche Dicke aufweist.

Eine Fortbildung der Erfindung sieht vor, daß der Dichtrand Randausnehmungen aufweist, wodurch der Dichtrand mit verschiedenen Wanddicken und materialsparend ausbildbar ist.

Bei einer vorteilhaften Ausgestaltung der Erfindung weist der Dichtrand einen äußeren Steg, einen inneren Steg und zwischen den Randausnehmungen angeordnete Verbindungsstege auf, wobei der äußere Steg den inneren Steg umfaßt. Hierdurch ist der Dichtrand der Kammerplatte, welcher wesentlich zur Stabilität der Kammerplatte beiträgt, materialsparend ausbildbar.

Vorzugsweise ist vorgesehen, daß der äußere Steg, der innere Steg und/oder die Verbindungsstege eine im wesentlichen gleiche Querschnittsfläche im Querschnitt der Kammerplatte aufweisen. Bei einer weiteren Fortbildung der Erfindung kann vorgesehen sein, daß im Querschnitt der Kammerplatte der äußere Steg, der innere Steg und/oder die Verbindungsstege eine Wanddicke aufweisen, die im wesentlichen gleich der Dicke des Innenbereiches ist. Hierdurch sind die Stege mittels der einfachen Spritzguß- oder Preßtechnik ausbildbar.

Eine Weiterbildung der Erfindung sieht vor, daß der äußere Steg, der innere Steg und die Verbindungsstege eine im wesentlichen gleiche Höhe aufweisen, so daß im Randbereich eine Stirnfläche gebildet ist. Hierdurch ist vorteilhaft eine Dichtung so ausbildbar, daß eine fließdichte Kammer gebildet ist, wenn die Kammerplatte in einer Filterpresse angeordnet ist.

Eine zweckmäßige Ausgestaltung der Erfindung sieht vor, daß eine innere dem Zentralbereich zugewandte Seitenfläche des äußeren Steges und/oder eine äußere vom Zentralbereich abgewandte Seitenfläche des inneren Steges und/oder eine innere dem Zentralbereich zugewandte Seitenfläche des inneren Steges einen kleinen Winkel, bevorzugt einen Winkel ≤ 10° mit dem Lot auf der Oberfläche im Zentralbereich bilden. Hierdurch sind der äußere und/oder der innere Steg, die beide die notwendige Stabilität im Randbereich der Kammerplatte sichern, materialsparend gebildet.

Vorteilhaft bilden Seitenflächen der Verbindungsstege einen kleinen Winkel, bevorzugt eine Winkel ≤ 10° mit dem Lot auf der Oberfläche im Zentralbereich, wodurch auch die Verbindungsstege materialsparend ausbildbar sind.

Eine Fortbildung der Erfindung sieht vor, daß auf der inneren dem Zentralbereich zugewandten Seitenfläche des inneren Steges Vorsprünge ausgebildet sind, wobei die Vorsprünge vom Randbereich ausgehend zum Zentralbereich abfallen. Hierdurch ist die Stabilität der Kammerplatte, insbesondere die Stabilität des inneren Steges verbessert. Darüber hinaus bilden die Vorsprünge eine schonende Auflage-Abstützung für ein Filtertuch, wodurch Drainagenfelder für das zu filtrierende Medium gebildet sind.

Bei einer zweckmäßigen Weiterbildung der Erfindung kann vorgesehen sein, daß von dem inneren und dem äußeren Steg wenigstens teilweise umfaßte Durchbrüche in Eckbereichen ausgebildet sind, wobei eine Wanddicke der Durchbrüche über den gesamten Umfang der Durchbrüche im wesentlichen gleich ist. Die im wesentlichen gleiche Wanddicke gewährleistet die Stabilität der Kammerplatte in den Eckbereichen und eine im wesentlichen lunkerfreie Herstellung der Kammerplatte.

Vorzugsweise sind auf wenigstens einem Teil der Oberfläche im Zentralbereich Drainagenoppen ausgebildet, wodurch ein Fließen des zu filtrierenden Mediums gewährleistet ist, wenn ein Filtertuch auf der Oberfläche der Kammerplatte aufliegt.

Eine Ausgestaltung der Erfindung sieht vor, daß auf der Oberfläche im Zentralbereich weitere Vorsprünge, die kegelstumpfartig ausgebildet sind und als Stütznokken für die Oberfläche wirken, angeordnet sind. Die weiteren Vorsprünge stützen auf einfache Art und Weise den Zentralbereich der Kammerplatte, wenn diese in einer Filterpresse angeordnet ist.

Um die weiteren Vorsprünge materialsparend auszugestalten, sieht eine Weiterbildung der Erfindung vor, daß in einem Kernbereich der weiteren Vorsprünge eine erste Ausnehmung und/oder in einem äußeren Bereich der weiteren Vorsprünge radial von dem Kernbereich ausgehend weitere Ausnehmungen ausgebildet sind, und daß Seitenflächen der ersten und/oder der weiteren Ausnehmungen mit dem Lot auf der Oberfläche im Zentralbereich einen kleinen Winkel, bevorzugt einen Winkel ≤ 10° bilden.

Vorteilhafterweise ist die Kammerplatte mittels eines normalen Preßverfahrens, insbesondere eines normalen Kunststoffpreßverfahren herstellbar, wobei Schrumpflunker im wesentlichen vermieden sind. Bei einer anderen bevorzugten Ausführungsform ist die Kammerplatte mittels eines normalen Spritzgußverfahrens und ohne Treibmittel herstellbar, wobei ebenfalls Schrumpflunker im wesentlichen vermieden sind. Hierdurch sind kostengünstige und gegenüber dem Stand der Technik mit vermindertem Aufwand ausführbare Möglichkeiten zur Herstellung von Kammerplatten geschaffen.

Die Erfindung wird im folgenden anhand einer Zeichnung näher erläutert. Hierbei zeigen:
- Fig. 1:: eine erfindungsgemäße Kammerplatte in Draufsicht;
- Fig. 2:: einen Teil einer Kammerplatte im Querschnitt entlang der Linie A- B und senkrecht zur Zeichenebene in Fig. 1;
- Fig. 3:: einen Teil einer Kammerplatte im Querschnitt entlang der Linie C- D und senkrecht zur Zeichenebene in Fig. 1;
- Fig. 4:: einen Teil einer Kammerplatte im Querschnitt entlang der Linie E- F und senkrecht zur Zeichenebene in Fig. 1;
- Fig. 5:: einen Teil einer Kammerplatte im Querschnitt entlang der Linie G- H und senkrecht zur Zeichenebene in Fig. 1; und
- Fig. 6:: einen Teil einer Kammerplatte im Querschnitt entlang der Linie L- M und senkrecht zur Zeichenebene in Fig. 1.

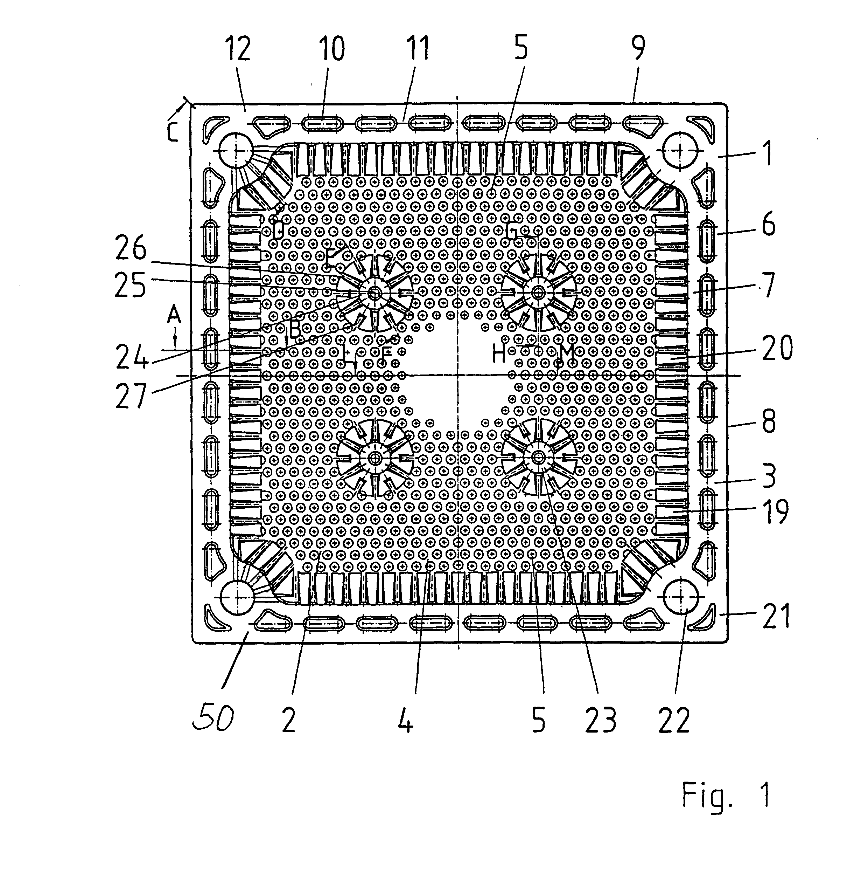

Gemäß Fig. 1 weist eine Kammerplatte 1 einen Zentralbereich 2 und einen den Zentralbereich 2 umfassenden Randbereich 3 auf. Eine Oberfläche 4 im Zentralbereich 2 ist im wesentlichen eben ausgebildet. Auf der Oberfläche 4 sind Drainagenoppen 5 angeordnet. Im Randbereich 3 ist ein Dichtrand 50, der einen äußeren Steg 6 und einen inneren Steg 7 aufweist, ausgebildet. Eine äußere von dem Zentralbereich 2 abgewandte Seitenfläche 8 des äußeren Steges 6 ist schlüssig mit Seitenkanten 9 der Kammerplatte 1 ausgebildet.

Zwischen Randausnehmungen 10, die zwischen dem äußeren Steg 6 und dem inneren Steg 7 angeordnet sind, sind Verbindungsstege 11 ausgebildet. Der äußere Steg 6, der innere Steg 7 und die Verbindungsstege 11 weisen die gleiche Höhe auf, so daß im Bereich des Dichtrandes 50 von dem äußeren Steg 6, dem inneren Steg 7 und den Verbindungsstegen 11 eine Stirnfläche 12 gebildet ist. Die Stimfläche 12 im Bereich des Dichtrandes 50 ist parallel zur Oberfläche 4 im Zentralbereich 2 ausgebildet.

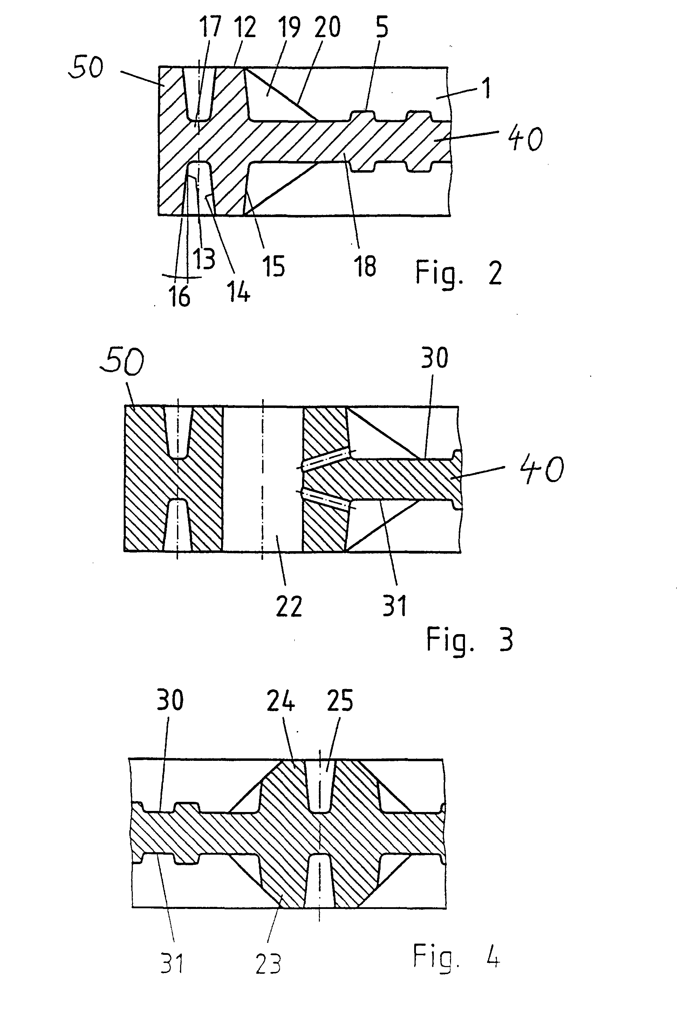

Fig. 2 zeigt einen Teil einer Kammerplatte 1 im Querschnitt entlang der Linie A-B und senkrecht zur Zeichenebene in Fig. 1. Gemäß Fig- 2 bilden eine innere dem Zentralbereich 2 zugewandte Seitenfläche 13 des äußeren Steges 6, eine äußere vom Zentralbereich 2 abgewandte Seitenfläche 14 des inneren Steges 7 und eine innere dem Zentralbereich 2 zugewandte Seitenfläche 15 des inneren Steges 7 einen kleinen Winkel 16, bevorzugt einen Winkel von ≤ 10° mit dem Lot auf der Oberfläche 4 im Zentralbereiche 2.

Ein Innenbereich 40 der Kammerplatte 1 weist gemäß Fig. 2 in einem Abschnitt 17 im Randbereich 3 im wesentlichen die gleiche Dicke auf, wie in einem Abschnitt 18 im Zentralbereich 2. Der Innenbereich 40 erstreckt sich über den Zentralbereich 2 und den Randbereich 3 der Kammerplatte 1, wobei die Dicke seines Querschnitts im Zentralbereich 2 und im Randbereich 3 im wesentlichen gleich ist. Im Abschnitt 17 ist der Dichtrand 50 auf dem Innenbereich 40 ausgebildet.

Es kann vorgesehen sein, daß auch Querschnitte des äußeren Steges 6, des inneren Steges 7 und/oder der Verbindungsstege eine im Vergleich zur Dicke des Querschnitts des Innenbereichs 40 im wesentlichen gleiche Dicke aufweisen (vgl. Fig. 2 und 3).

Die Höhe der Drainagenoppen 5 im Zentralbereich 2 ist klein gegenüber der Dikke der Kammerplatte 1 im Zentralbereich 2.

Gemäß den Fig. 1 und 2 sind an der inneren, dem Zentralbereich 2 zugewandten Seitenfläche 15 des inneren Steges 7 Vorsprünge 19 angeordnet. Die Vorsprünge 19 weisen eine von der Stirnfläche 12 zur Oberfläche 4 im Zentralbereich 2 abfallende Oberfläche 20 auf.

Gemäß Fig. 1 weist die Kammerplatte 1 in Eckbereichen 21 Durchbrüche 22 auf. Fig. 3 zeigt einen Teil eines Querschnitts senkrecht zur Zeichenebene in Fig. 1 in einem der Eckbereiche 21. Gemäß den Fig. 1 und 3 ist eine Wanddicke des inneren Steges 7 und des äußeren Steges 6 im Bereich des Durchbruchs 22 im wesentlichen gleich auf dem gesamten Umfang des Durchbruchs 22. Darüber hinaus entspricht die Wanddicke im Bereich der Durchbrüche 22 vorzugsweise im wesentlichen der Dicke des Innenbereichs 40.

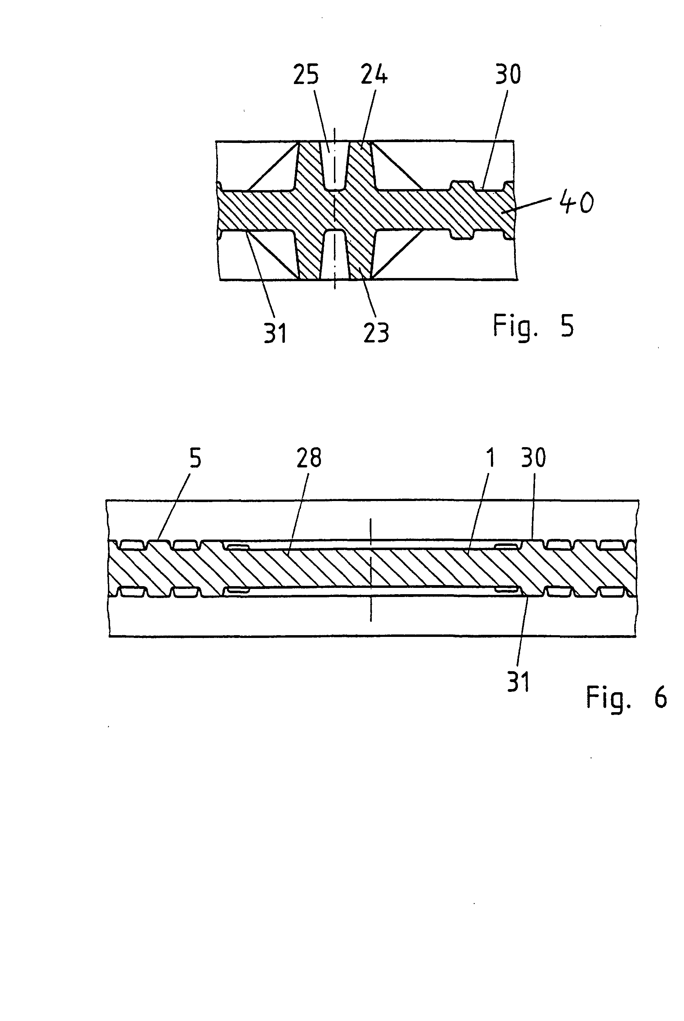

Die Fig. 4 und 5 zeigen Querschnitte der Kammerplatte 1 im Bereich weiterer Vorsprünge 23 auf der Oberfläche 4 im Zentralbereich 2. Es werden Teile von Querschnitten senkrecht zur Zeichenebene in Fig. 1 entlang einer Linie E-F (Fig. 4) bzw. G-H (Fig. 5) gezeigt. Die weiteren Vorsprünge 23 sind kegelstumpfartig ausgebildet. In einem Kernbereich 24 ist eine erste Ausnehmung 25 ausgebildet. Vom Kernbereich 24 radial ausgehend weisen die weiteren Vorsprünge 23 weitere Ausnehmungen 26 (Fig. 1) auf. Zwischen den weiteren Ausnehmungen 26 (Fig. 1) sind Kerben 27 vorgesehen. Im Bereich der weiteren Vorsprünge 23 weist der Querschnitt der Kammerplatte 1 im wesentlichen die gleiche Dicke wie im Bereich außerhalb der weiteren Vorsprünge 23 auf (Fig. 4 und 5).

Fig. 6 zeigt einen Teil eines Querschnitts im Zentrum 28 (Fig. 1) des Zentralbereichs 2.

Den Fig. 2 bis 6 ist zu entnehmen, daß die Kammerplatte 1 auf einer Vorderseite 30 und auf einer Rückseite 31 in gleicher Weise ausbildbar ist.

Die beschriebene Kammerplatte 1 kann aufgrund ihrer im wesentlichen gleichen Dicke des Innenbereichs 40 im Randbereich 3 und im Zentralbereich 2 mittels eines normalen Preßverfahrens für Kunststoffe hergestellt werden. Hierbei wird ein Granulat oder ein vorplastifiziertes Material in eine Form gepreßt und abgekühlt. Auf Grund der beschriebenen Gestaltung der Kammerplatte 1 ist hierbei eine nicht gewünschte Lunkerbildung verhindert. Auf Treibmittel oder Nachfüllstationen kann im Vergleich zum Stand der Technik verzichtet werden.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Kammerplatte für eine Filterpresse, mit einem Zentralbereich und einem Randbereich, wobei eine Oberfläche im Zentralbereich im wesentlichen eben ausgebildet ist,
**gekennzeichnet durch** einen Innenbereich (40), der im Zentralbereich (2) und im Randbereich (3) ausgebildet ist und der in einem Querschnitt der Kammerplatte (1) senkrecht zu der Oberfläche (4) im Zentralbereich (2) eine im wesentlichen gleiche Dicke im Randbereich (3) und im Zentralbereich (2) aufweist.

2. Kammerplatte nach Anspruch 1, **dadurch gekennzeichnet, daß** im Randbereich (3) ein Dichtrand (50) ausgebildet ist, wobei im Querschnitt der Kammerplatte (1) eine Dicke des Dichtrandes (50) im wesentlichen gleich der Dicke des Innenbereiches (40) ist.

3. Kammerplatte nach Anspruch 2, **dadurch gekennzeichnet, daß** der Dichtrand (50) Randausnehmungen (10) aufweist.

4. Kammerplatte nach Anspruch 3, **dadurch gekennzeichnet, daß** der Dichtrand (50) einen äußeren Steg (6), einen inneren Steg (7) und zwischen den Randausnehmungen (10) angeordnete Verbindungsstege (11) aufweist, wobei der äußere Steg (6) den inneren Steg (7) umfaßt.

5. Kammerplatte nach Anspruch 4, **dadurch gekennzeichnet, daß** der äußere Steg (6), der innere Steg (7) und/oder die Verbindungsstege (11) eine im wesentlichen gleiche Querschnittsfläche im Querschnitt der Kammerplatte (1) aufweisen.

6. Kammerplatte nach Anspruch 4, **dadurch gekennzeichnet, daß** im Querschnitt der Kammerplatte (1) der äußere Steg (6), der innere Steg (7) und/oder die Verbindungsstege (11) eine Wanddicke aufweisen, die im wesentlichen gleich der Dicke des Innenbereiches (40) ist.

7. Kammerplatte nach Anspruch 4, **dadurch gekennzeichnet, daß** der äußere Steg (6), der innere Steg (7) und die Verbindungsstege (11) eine im wesentlichen gleiche Höhe aufweisen, so daß im Randbereich (3) eine Stirnfläche (12) gebildet ist.

8. Kammerplatte nach Anspruch 4, **dadurch gekennzeichnet, daß** eine innere dem Zentralbereich (2) zugewandte Seitenfläche (13) des äußeren Steges (6) und/oder eine äußere vom Zentralbereich (2) abgewandte Seitenfläche (14) des inneren Steges (7) und/oder eine innere dem Zentralbereich (2) zugewandte Seitenfläche (15) des inneren Steges (7) einen kleinen Winkel (16), bevorzugt einen Winkel ≤ 10° mit dem Lot auf der Oberfläche (4) im Zentralbereich (2) bilden.

9. Kammerplatte nach Anspruch 4, **dadurch gekennzeichnet, daß** Seitenflächen der Verbindungsstege (11) einen kleinen Winkel, bevorzugt eine Winkel ≤ 10° mit dem Lot auf der Oberfläche (4) im Zentralbereich (2) bilden.

10. Kammerplatte nach Anspruch 4, **dadurch gekennzeichnet, daß** auf der inneren dem Zentralbereich (2) zugewandten Seitenfläche (15) des inneren Steges (7) Vorsprünge (19) ausgebildet sind, wobei die Vorsprünge (19) vom Randbereich (3) ausgehend zum Zentralbereich (2) abfallen.

11. Kammerplatte nach Anspruch 4, **gekennzeichnet durch** von dem inneren (7) und dem äußeren Steg (6) wenigstens teilweise umfaßte Durchbrüche (22) in Eckbereichen (21), wobei eine Wanddicke der Durchbrüche (22) über den gesamten Umfang der Durchbrüche (22) im wesentlichen gleich ist.

12. Kammerplatte nach einem der vorstehenden Ansprüche, **dadurch gekennzeichnet, daß** auf wenigstens einem Teil der Oberfläche (4) im Zentralbereich (2) Drainagenoppen (5) ausgebildet sind.

13. Kammerplatte nach einem der vorstehenden Ansprüche, **gekennzeic hnet durch** weitere Vorsprünge (23) auf der Oberfläche (4) im Zentralbereich (2), wobei die weiteren Vorsprünge (23) kegelstumpfartig ausgebildet sind und als Stütznocken für die Oberfläche (4) wirken.

14. Kammerplatte nach Anspruch 13, **dadurch gekennzeichnet, daß** in einem Kembereich (24) der weiteren Vorsprünge (23) eine erste Ausnehmung (25) und/oder in einem äußeren Bereich der weiteren Vorsprünge (23) radial von dem Kernbereich (24) ausgehend weitere Ausnehmungen (26) ausgebildet sind.

15. Kammerplatte nach Anspruch 14, **dadurch gekennzeichnet, daß** Seitenflächen der ersten Ausnehmung (25) und/oder Seitenflächen der weiteren Ausnehmungen (26) mit dem Lot auf der Oberfläche (4) im Zentralbereich (2) einen kleinen Winkel, bevorzugt einen Winkel ≤ 10° bilden.

## Claims

1. Chamber plate for a filter press having a central area and a marginal area, a surface in the central area being substantially flat, **characterized by** an inner area (40) formed in the central area (2) and in the marginal area (3) and which in a cross-section of the chamber plate (1) perpendicular to the surface (4) in the central area (2) has substantially the same thickness in the marginal area (3) and in the central area (2).

2. Chamber plate according to claim 1, **characterized in that** in the marginal area (3) is formed a sealing border (50) and in the cross-section of the chamber plate (1) a thickness of the sealing border (50) is substantially identical to the thickness of the inner area (40).

3. Chamber plate according to claim 2, **characterized in that** the sealing border (50) has marginal recesses (10).

4. Chamber plate according to claim 3, **characterized in that** the sealing border (50) has an outer web (6), an inner web (7) and connecting webs (11) located between the marginal recesses (10), the outer web (6) embracing the inner web (7).

5. Chamber plate according to claim 4, **characterized in that** the outer web (6), the inner web (7) and/or the connecting webs (11) have a substantially identical cross-sectional area in the cross-section of the chamber plate (1).

6. Chamber plate according to claim 4, **characterized in that** in the cross-section of the chamber plate (1) the outer web (6), the inner web (7) and/or the connecting webs (11) have a wall thickness substantially identical to the thickness of the inner area (40).

7. Chamber plate according to claim 4, **characterized in that** the outer web (6), inner web (7) and connecting webs (11) have a substantially identical height, so that a front face (12) is formed in the marginal area (3).

8. Chamber plate according to claim 4, **characterized in that** an inner lateral face (13) of the outer web (6) facing the central area (2) and/or an outer lateral face (14) of the inner web (7) remote from the central area (2) and/or an inner lateral face (15) of the inner web (7) facing the central area (2) form a small angle (16), preferably of ≤ 10°, with the perpendicular on the surface (4) in the central area (2).

9. Chamber plate according to claim 4, **characterized in that** lateral faces of the connecting webs (11) form a small angle, preferably of ≤ 10° with the perpendicular on the surface (4) in the central area (2).

10. Chamber plate according to claim 4, **characterized in that** on the inner lateral face (15) of the inner web (7) facing the central area (2) are formed projections (19), which decline from the marginal area (3) to the central area (2).

11. Chamber plate according to claim 4, **characterized by** openings (22) in the corner areas (21), which are at least partly embraced by the inner web (7) and outer web (6), the wall thickness of the openings (22) being substantially identical over the entire circumference of the openings (22).

12. Chamber plate according to one of the preceding claims, **characterized in that** drainage studs (5) are formed on at least part of the surface (4) in central area (2).

13. Chamber plate according to one of the preceding claims, **characterized by** further projections (23) on the surface (4) in central area (2), the further projections (23) being frustum-shaped and act as support studs for the surface (4).

14. Chamber plate according to claim 13, **characterized in that** in a core area (24) of the further projections (23) are formed a first recess (25) and/or in an outer area of the further projections (23) and emanating radially from the core area (24) further recesses (26).

15. Chamber plate according to claim 14, **characterized in that** lateral faces of the first recess (25) and/or lateral faces of the further recesses (26) form with the perpendicular on the surface (4) in central area (2) a small angle, preferably of ≤ 10°.

## Revendications

1. Plateau de chambre pour un filtre-presse, avec une zone centrale et une zone de bordure, une surface se trouvant dans la zone centrale étant sensiblement plane, **caractérisé par** une zone intérieure (40), réalisée dans la zone centrale (2) et la zone de bordure (3) et qui, en observant le plateau de chambre (1) en vue en coupe, perpendiculairement à la surface (4) dans la zone centrale (2), présente une épaisseur sensiblement identique dans la zone de bordure (3) et dans la zone centrale (2).

2. Plateau de chambre selon la revendication 1, **caractérisé en ce que**, dans la zone de bordure (3), est réalisée une bordure d'étanchéité (50), où en observant le plateau de chambre (1) en vue en coupe, une épaisseur du bord d'étanchéité (50) est sensiblement identique à l'épaisseur de la zone intérieure (40).

3. Plateau de chambre selon la revendication 2, **caractérisé en ce que** la bordure d'étanchéité (50) présente des évidements de bordure (10).

4. Plateau de chambre selon la revendication 3, **caractérisé en ce que** la bordure d'étanchéité (50) comprend une nervure extérieure (6), une nervure intérieure (7) et des nervures de liaison (11), disposées entre les évidements de bordure (10), la nervure extérieure (6) entourant la nervure intérieure (7).

5. Plateau de chambre selon la revendication 4, **caractérisé en ce que** la nervure extérieure (6), la nervure intérieure (7) et/ou les nervures de liaison (11) présentent, en observant le plateau de chambre (1) en vue en coupe, une aire de section transversale sensiblement identique.

6. Plateau de chambre selon la revendication 4, **caractérisé en ce que**, en observant le plateau de chambre (1) en vue en coupe, la nervure extérieure (6), la nervure intérieure (7) et/ou les nervures de liaison (11) ont une épaisseur de paroi sensiblement identique à l'épaisseur de la zone intérieure (40).

7. Plateau de chambre selon la revendication 4, **caractérisé en ce que** la nervure extérieure (6), la nervure intérieure (7) et les nervures de liaison (11) présentent une hauteur sensiblement identique, de sorte qu'une face frontale (12) est formée dans la zone de bordure (3).

8. Plateau de chambre selon la revendication 4, **caractérisé en ce qu'**une face latérale intérieure (13), tournée vers la zone centrale (2), de la nervure extérieure (6) et/ou une face latérale extérieure (14), opposée à la zone centrale (2), de la nervure intérieure (7) et/ou une face latérale intérieure (15), tournée vers la zone centrale (2.), de la nervure intérieure (7), forment un' petit angle (16), de préférence un angle ≤ 10° par rapport à la verticale tracée sur la surface (4), dans la zone centrale (2).

9. Plateau de chambre selon la revendication 4, **caractérisé en ce que** des faces latérales des nervures de liaison (11) forment un petit angle, de préférence un angle ≤ 10°, avec la verticale à la surface (4) tracée sur la zone centrale (2).

10. Plateau de chambre selon la revendication 4, **caractérisé en ce que**, sur la face latérale intérieure (15), tournée vers la zone centrale (2), de la nervure intérieure (7) sont réalisées des saillies (19), les saillies (19) allant en descendant, en partant de la zone de bordure (3) et en allant vers la zone centrale (2).

11. Plateau de chambre selon la revendication 4, **caractérisé par** des percements (22), entourés au moins partiellement par la nervure intérieure (7) et la nervure extérieure (6), dans les zones d'angle (21), une épaisseur de paroi des percements (22) étant sensiblement identique sur la totalité de la périphérie des percements (22).

12. Plateau de chambre selon l'une des revendications précédentes, **caractérisé en ce que** des tétons de drain (5) sont formés sur au moins une partie de la surface (4), dans la zone centrale (2).

13. Plateau de chambre selon l'une des revendications précédentes, **caractérisé par** d'autres saillies (23) sur la surface (4), dans la zone centrale (2), les autres saillies (23) étant conformées en tronc de cône et agissant comme des ergots d'appui pour la surface (4).

14. Plateau de chambre selon la revendication 13, **caractérisé en ce que**, dans une zone de noyau (24) des autres saillies (23), est réalisé un premier évidement (25) et/ou dans une zone extérieure des autres saillies (23), sont réalisés d'autres évidements (26), partant radialement depuis la zone de noyau (24).

15. Plateau de chambre selon la revendication 14, **caractérisé en ce que** des faces latérales du premier évidement (25) et/ou des faces latérales d'autres évidements (26) forment, avec la verticale de la surface (4), dans la zone centrale (2), un petit angle, de préférence un angle ≤ 10°.
